Europäisches Patentamt

European Patent Office

Office européen des brevets

(11) Veröffentlichungsnummer: **0 335 146**

**A2**

(12) **EUROPÄISCHE PATENTANMELDUNG**

(21) Anmeldenummer: 89104151.9

(22) Anmeldetag: 09.03.89

(51) Int. Cl.⁴: **C03B 23/11 , C03B 23/09**

(30) Priorität: 31.03.88 DE 3810940

(43) Veröffentlichungstag der Anmeldung:
04.10.89 Patentblatt 89/40

(84) Benannte Vertragsstaaten:
**AT BE CH DE ES FR GB GR IT LI LU NL SE**

(71) Anmelder: **SCHOTT-RUHRGLAS GMBH**
**Theodor-Schmidt-Strasse 25**
**D-8580 Bayreuth(DE)**

(72) Erfinder: **Männl, Reinhard**
**Kohllohstrasse 41**
**D-8596 Mitterteich(DE)**

(74) Vertreter: **Dr. Fuchs, Dr. Luderschmidt**
**Dipl.-Phys. Seids, Dr. Mehler Patentanwälte**
**Sonnenberger Strasse 100**
**D-6200 Wiesbaden(DE)**

(54) **Vorrichtung zum Herstellen eines hermetisch verschlossenen medizinischen Probenbehälters in der ärztlichen oder klinischen Praxis.**

(57) Vorrichtung zum Herstellen eines hermetisch verschlossenen medizinischen Probenbehälters in der ärztlichen oder klinischen Praxis durch Abschmelzen eines vorgegebenen Abschmelzbereichs des Probenbehälters mittels einer Heizeinrichtung, dadurch gekennzeichnet, daß die Vorrichtung eine motorisch drehbare Halterung für den Probenbehälter, eine Heizeinrichtung zum Abschmelzen des Probenbehälters, eine Abzieheinrichtung zum Abziehen einer Abschmelzspitze aus dem Abschmelzbereich des Probenbehälters und eine die Drehung der Halterung sowie den Betrieb der Heizeinrichtung und der Abzieheinrichtung selbsttätig zum Ablauf eines vorgegebenen Abschmelzprogrammes steuernde, manuell auslösbare Steuereinrichtung in einem in der ärztlichen oder klinischen Praxis handhabbaren Gerät zusammengefaßt aufweist.

Fig. 1

## Vorrichtung zum Herstellen eines hermetisch verschlossenen medizinischen Probenbehälters in der ärztlichen oder klinischen Praxis

Die Erfindung betrifft eine Vorrichtung zum Herstellen eines hermetisch verschlossenen medizinischen Probenbehälters in der ärztlichen oder klinischen Praxis durch Abschmelzen eines vorgegebenen Abschmelzbereichs des Probenbehälters mittels einer Heizeinrichtung, wobei der Probenbehälter vorzugsweise eine das Öffnen erleichternde Spannungszone aufweist, die von dem Abschmelzbereich genügend weit entfernt ist, um bei dem Abschmelzen einen thermischen Abbau der in der Spannungszone vorhandenen mechanischen Spannung zu vermeiden.

Die Versendung medizinischen Probenmaterials, z.B. zu untersuchender Gewebe- oder Blutproben an Untersuchungslaboratorien, birgt die Gefahr in sich, daß während des Versandes Teile des Probenmaterials austreten und zu Verunreinigungen oder zu einer Gefährdung des mit dem Versand beauftragten Personals führen. Es ist deshalb zweckmäßig, medizinische Proben in Probenbehältern aus Glas oder ähnlichen Materialien zu versenden, die durch Abschmelzen hermetisch verschlossen sind. Die Einführung dieses Prinzips begegnet jedoch in der ärztlichen oder klinischen Praxis großen Schwierigkeiten. In der Regel ist das dort beschäftigte Personal mit dem Zuschmelzen von Glasbehältern nicht vertraut. Die erzielbaren Ergebnisse wären in hohem Maße von der Geschicklichkeit der ausführenden Person abhängig. Auch könnte nicht hinreichend ausgeschlossen werden, daß das Probenmaterial zu stark erwärmt und dadurch unbrauchbar wird. Es würden sich abgeschmolzene Probenbehälter ergeben, die unterschiedliche Abmessungen aufweisen und für den Versand individuell verpackt werden müssen. Dies würde einen erheblichen Aufwand erfordern. Außerdem wäre nicht sichergestellt, daß in jedem Fall eine einwandfreie Abschmelzung und damit ein einwandfreier hermetischer Verschluß des Probenbehälters erzielt wird.

Die vorliegende Erfindung geht von der Aufgabe aus, eine Vorrichtung zum Herstellen eines hermetisch verschlossenen medizinischen Probenbehälters in der ärztlichen oder klinischen Praxis zu schaffen, die unabhängig von der Geschicklichkeit des Ausführenden einen hermetisch verschlossenen Probenbehälter mit vorgegebenen einheitlichen Abmessungen liefert und dadurch die Voraussetzung dafür schafft, daß für dem Versand der verschlossenen Probenbehälter vorgefertigte einheitliche Verpackungen verwendet werden können und demgemäß dar Verpackungsaufwand herabgesetzt und die Qualität der Abschmelzung vereinheitlicht wird.

Nach der Erfindung wird diese Aufgabe gelöst mit einer Vorrichtung der eingangs angegebenen Art, die dadurch gekennzeichnet ist, daß sie eine motorisch drehbare Halterung für einen abzuschmelzenden Probenbehälter, eine zum Abschmelzen des Probenbehälters angeordnete Heizeinrichtung, eine Abzieheinrichtung zum Abziehen einer Abschmelzspitze aus dem Abschmelzbereich des Probenbehälters und eine die Drehung der Halterung sowie den Betrieb der Heizeinrichtung und der Abzieheinrichtung selbsttätig zum Ablauf eines vorgegebenen Abschmelzprogrammes steuernde manuell auslösbare Steuereinrichtung in einem in der ärztlichen oder klinischen Praxis handhabbaren Gerät zusammengefaßt aufweist.

Bei der erfindungsgemäßen Vorrichtung braucht lediglich der gefüllte Probenbehälter in die Halterung eingesetzt und die Steuereinrichtung ausgelöst zu werden; es läuft dann der Abschmelzvorgang automatisch in vorgegebener Weise ab, so daß es auf die Geschicklichkeit des Ausführenden nicht ankommt und einheitliche Arbeitsergebnisse erzielt werden.

Die Erfindung sowie Ausgestaltungen der Erfindung und damit erzielbare Vorteile werden im folgenden anhand eines Ausführungsbeispiels in Verbindung mit den Zeichnungen näher beschrieben.

Figur 1 ist eine schematische Darstellung nach Art einer Seitenansicht und zeigt eine Ausführungsform einer erfindungsgemäßen Vorrichtung.

Figur 2 zeigt in ähnlicher Darstellung wie Figur 1 eine andere Ausführungsform. Teile, die in entsprechender Form in Figur 1 vorkommen, sind in Figur 2 mit denselben Bezugszeichen wie in Figur 1 bezeichnet, jedoch unter Voranstellung der Ziffer 2. Insoweit wird, um Wiederholungen zu vermeiden, auf die Beschreibung zu Figur 1 verwiesen.

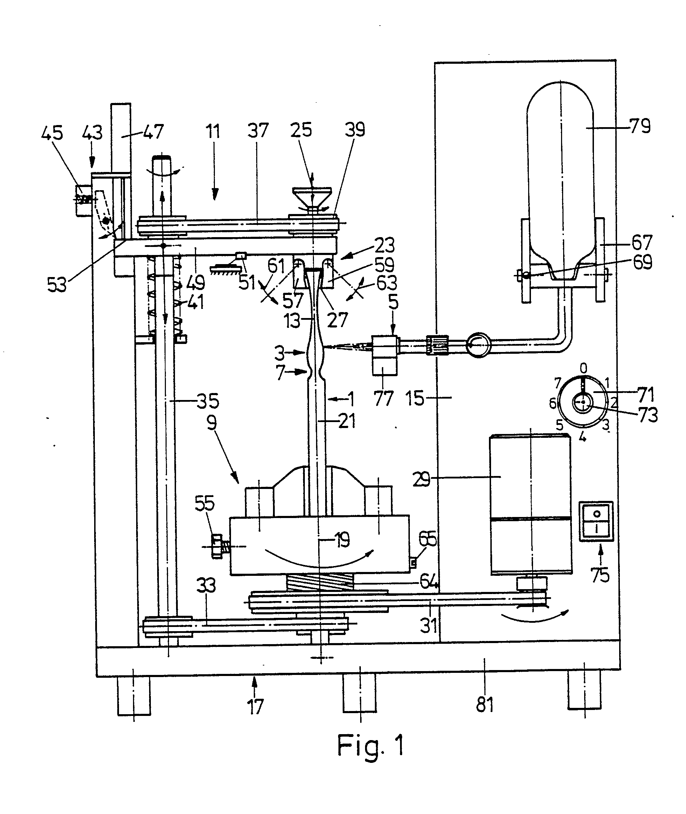

Figur 1 zeigt eine Vorrichtung zum Herstellen eines hermetisch verschlossenen medizinischen Probenbehälters 1 in der ärztlichen oder klinischen Praxis durch Abschmelzen eines vorgegebenen Abschmelzbereichs 3 des Probenbehälters 1 mittels einer Heizeinrichtung 5. Vorzugsweise wird ein Probenbehälter 1 verwendet, der eine das Öffnen erleichternde Spannungszone 7 aufweist, die von dem Abschmelzbereich 3 genügend weit entfernt ist, um bei dem Abschmelzen einen thermischen Abbau der in der Spannungszone 7 vorhandenen mechanischen Spannung zu vermeiden.

Die Vorrichtung enthält eine motorisch drehbare Halterung 9 für den abzuschmelzenden Probenbehälter 1, eine zum Abschmelzen des in der Halterung 9 befindlichen Probenbehälters 1 angeordnete Heizeinrichtung 5 und eine Abzieheinrichtung 11 zum Abziehen einer Abschmelzspitze 13 aus dem Abschmelzbereich 3 des Probenbehälters 1, sowie eine die Drehung der Halterung 9 sowie den Betrieb der Heizeinrichtung 5 und der Abzieheinrichtung 11 selbsttätig zum Ablauf eines vorgegebenen Abschmelzprogrammes steuernde, manuell auslösbare Steuereinrichtung 15 zusammengefaßt in einem Gerät 17, das in der ärztlichen oder klinischen Praxis handhabbar ist.

Die Halterung 9 und der darin eingespannte Probenbehälter 1 sind um eine Drehachse 19 drehbar, die mit einer Achse 21 des Probenbehälters 1 im wesentlichen zusammenfällt. Die Abzieheinrichtung 11 enthält eine Klemme 23, die in einer Abziehrichtung 25 zwischen einer Anbringstellung gemäß Figur 1, in der sie an einer vorgebildeten Einfüllöffnung 27 des Probenbehälters anbringbar ist, und einer Abziehstellung, die in Richtung 25 von der dargestellten Anbringstellung entfernt ist, bewegbar ist. Die Klemme 23 ist synchron mit der Halterung 9 drehangetrieben.

Bei der dargestellten Ausführungform dient zum synchronen Antrieb der Halterung 9 und der Klemme 23 ein Elektromotor 29, der über einen Riemenantrieb 31 die Halterung 9 und über einen weiteren Riemenantrieb 33 eine Zwischenwelle 35 antreibt. Die Zwischenwelle 35 ist über einen Riemenantrieb 37 mit einem Lager 39 für die Klemme 23 verbunden. Der synchrone Antrieb der Halterung 9 und der Klemme 23 schafft die Voraussetzung dafür, daß das Abschmelzen automatisch vor sich gehen kann.

Bei der dargestellten Ausführungsform ist die Klemme 23 mittels einer Feder 41 in die nicht dargestellte Abziehstellung vorgespannt und in der dargestellten Anbringstellung mittels einer auslösbaren Riegeleinrichtung 43 verriegelbar. Dadurch bedarf es nur des Auslösens der Riegeleinrichtung, um die Bewegung der Klemme in die Abziehstellung zu veranlassen.

Bei der dargestellten Ausführungsform ist die Riegeleinrichtung 43 von der Steuereinrichtung 15 her selbsttätig betätigbar. Dadurch kann sichergestellt werden, daß die Bewegung in die Abziehstellung erst nach einer Zeitspanne erfolgt, nach der der Abschmelzbereich 3 auf die zum Abziehen erforderliche Temperatur erwärmt ist. Die Leitungsverbindung zwischen dem nur schematisch angedeuteten Elektromagneten 45 und der Steuereinrichtung 15 sind nicht dargestellt.

Um eine geeignete Abziehgeschwindigkeit einzustellen, ist bei der dargestellten Ausführungsform eine Viskositätsbremse 47 vorgesehen.

Bei der dargestellten Ausführungsform ist die Klemme 23 in der dargestellten Anbringstellung aus einem dargestellten Anbringbereich in einen nicht dargestellten Freigabebereich bewegbar, in welchem sie ein Befüllen des in der Halterung befindlichen Probebehälters 1 nicht behindert. Dadurch ist es möglich, den Probenbehälter erst nach dem Einsetzen in die Halterung 9 zu befüllen und somit ein Hantieren des gefüllten, aber noch nicht abgeschmolzenen Probenbehälters weitgehend zu vermeiden. Bei der dargestellten Ausführungsform ist zu dem genannten Zweck das Lager 39 der Klemme 23 an einem Arm 49 angebracht, der um die Achse der Zwischenwelle 35 schwenkbar ist und aus dem Anbringbereich unter Überwindung von federnden Rastmitteln 51 in einen Freigabebereich wegschwenkbar ist, in welchem ein Befüllen des in der Halterung 9 befindlichen Probenbehälters 1 möglich ist. Damit während des Schwenkens des Arms 49 der Arm in der Anbringstellung gehalten wird, hat der Arm 49 einen mit der Riegeleinrichtung 43 in Eingriff stehenden Anschlagteil 53, der sich über den Schwenkbereich erstreckt.

Bei der dargestellten Ausführungsform sind die Halterung 9 und die Klemme 23 zur Aufnahme von Probenbehältern 1 verschiedener Abmessungen ausgebildet. Das ist vorteilhaft, weil dadurch der Anwendungsbereich der Vorrichtung erweitert wird. Zu diesem Zweck hat die Halterung 9 eine Stellschraube 55, und die Halterung 23 hat federnd vorgespannte Klemmbacken 57, 59, die in den dargestellten Winkelrichtungen 61 bzw. 63 schwenkbar sind. Außerdem ist bei der dargestellten Ausführungsform die Halterung 9 relativ zu der Klemme 23 verstellbar; zu diesem Zweck ist die Halterung 9 auf einen Gewindeschaft 63 aufgeschraubt und kann in der gewählten Lage mit einer Stellschraube 65 festgelegt werden.

Bei der dargestellten Ausführungsform ist ferner die Heizeinrichtung 5 relativ zu der Halterung 9 einstellbar. Dadurch kann bei Probenbehältern 1 verschiedener Abmessungen die Heizeinrichtung 5 jeweils in die richtige Abschmelzposition gebracht werden. Zu diesem Zweck ist bei der dargestellten Ausführungsform die Heizeinrichtung 5 in einer Führung 67 in der Abziehrichtung 25 erstellbar und in der jeweils gewählten Stellung mittels einer Klemmschraube 69 festlegbar.

Die Steuereinrichtung 15 ist bei der dargestellten Ausführungsform auf unterschiedliche Verfahrensabläufe einstellbar; dadurch kann das Abschmelzprogramm an den jeweils verwendeten Typ von Probenbehälter 1 angepaßt werden. Die Einstellung erfolgt mittels zweier Drehknöpfe 71 und 73, die beispielsweise die Drehzahl des Antriebsmotors 29 bzw. die Zeitspanne zwischen dem manuellen Auslösen der Steuereinrichtung 15 und dem Beginn der Abziehbewegung der Klemme 23 bestimmen. Zum Auslösen des Programmablaufs ist ein von Hand betätigbarer Schalter 75 vorgesehen.

Bei der dargestellten Ausführungsform enthält die Heizeinrichtung 5 einen auf den Abschmelzbereich 3 fokussierten Brenner 77 für gasförmigen Brennstoff und einen Brennstoffbehälter 79.

Die gesamte Vorrichtung ist auf einer gemeinsamen Grundplatte 81 aufgebaut und kann somit bequem als Ganzes gehandhabt werden.

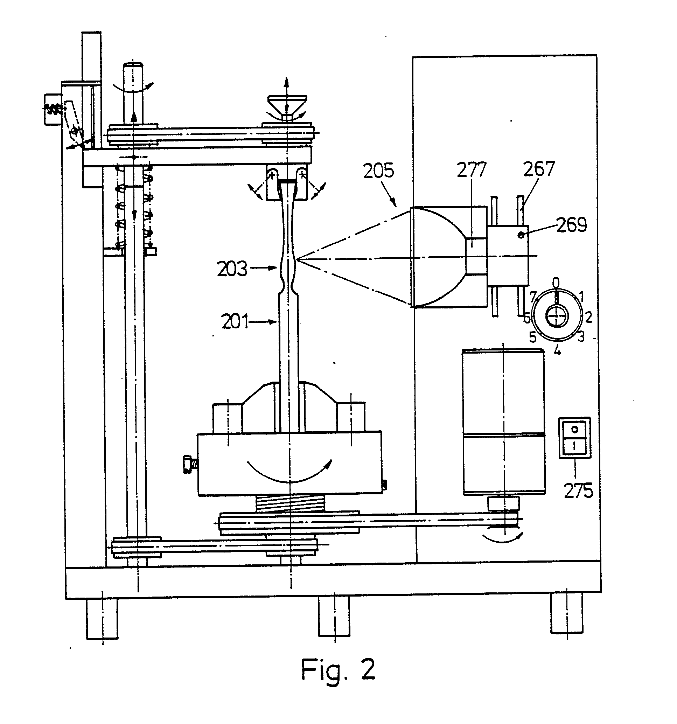

Figur 2 zeigt eine Ausführungsform, die weitgehend der Ausführungsform nach Figur 1 entspricht, jedoch in der Heizeinrichtung 205 eine Infrarotlampe 277 aufweist, die auf den Abschmelzbereich 203 fokussiert ist. Diese Ausführungsform ist zur Verwendung von Probenbehältern 201 geeignet, die wenigstens in dem Abschmelzbereich 203 eine zum Abschmelzen ausreichende Infrarot-Absorption aufweisen. Der Vorteil der dargestellten Ausführungsform besteht insbesondere darin, daß die Heizleistung einer Infrarotlampe genauer bestimmbar ist als die Heizleistung eines Gasbrenners. Außerdem entstehen keine Abgase.

Für die beschriebene Ausführungsform sind Probenbehälter besonders zweckmäßig, die aus Glas bestehen und zumindest in dem Abschmelzbereich 203 aus infrarot-absorbierendem Glas bestehen. Zweckmäßigerweise hat dieses Glas eine verhältnismäßig niedrige Abschmelztemperatur; dadurch genügt eine mäßige Heizleistung der Infrarotlampe 277. Es ist ohne weiteres möglich, infrarotabsorbierende Gläser bereitzustellen, die eine Abschmelztemperatur im Bereich von etwa 950 bis 1000°C haben. Ein geeignetes Glas dieser Art wird von der Firma SCHOTT GLASWERKE unter der Bezeichnung Typ 8516 geliefert. Es hat eine Abschmelztemperatur von etwa 985°C.

Besondere Vorteile ergeben sich, wenn bei der erfindungsgemäßen Vorrichtung ein Probenbehälter der beschriebenen Art mit vorgegebenen standardisierten Abmessungen verwendet wird. Es sind dann in der ärztlichen oder klinischen Praxis beim Abschmelzen der Probebehälter keinerlei Verstellungen erforderlich; es genügt das Einsetzen des Probebehälters und das Einschalten der Vorrichtung mit dem Schalter 75 bzw. 275. Bei der Ausführung mit Gasbrenner (Figur 1) ist zweckmäßigerweise der Brenner 77 mit einer selbsttätigen Zündvorrichtung versehen, die beim Einschalten der Vorrichtung in Betrieb gesetzt wird.

**Ansprüche**

1. Vorrichtung zum Herstellen eines hermetisch verschlossenen medizinischen Probenbehälters (1) in der ärztlichen oder klinischen Praxis durch Abschmelzen eines vorgegebenen Abschmelzbereichs (3) des Probenbehälters (1) mittels einer Heizeinrichtung (5), wobei der Probenbehälter vorzugsweise eine das Öffnen erleichternde Spannungszone (7) aufweist, die von dem Abschmelzbereich (3) genügend weit entfernt ist, um bei dem Abschmelzen einen thermischen Abbau der in der Spannungszone (7) vorhandenen mechanischen Spannung zu vermeiden, dadurch gekennzeichnet, daß die Vorrichtung eine motorisch drehbare Halterung (9) für einen abzuschmelzenden Probenbehälter (1), eine zum Abschmelzen des in der Halterung (9) befindlichen Probenbehälters (1) angeordnete Heizeinrichtung (5), eine Abzieheinrichtung zum Abziehen einer Abschmelzspitze (13) aus dem Abschmelzbereich (3) des Probenbehälters (1) und eine die Drehung der Halterung (9) sowie den Betrieb der Heizeinrichtung (5) und der Abzieheinrichtung selbsttätig zum Ablauf eines vorgegebenen Abschmelzprogramms steuernde manuell auslösbare Steuereinrichtung (15) in einem in der ärztlichen oder klinischen Praxis handhabbaren Gerät (17) zusammengefaßt aufweist.

2. Vorrichtung nach Anspruch 1, dadurch gekennzeichnet, daß die Abzieheinrichtung eine Klemme (23) aufweist, die zwischen einer Anbringstellung, in der sie an einer vorgebildeten Einfüllöffnung (27) des Probenbehälters (1) anbringbar ist, und einer Abziehstellung bewegbar ist, und daß die Klemme (23) synchron mit der Halterung (9) drehantreibbar ist.

3. Vorrichtung nach Anspruch 2, dadurch gekennzeichnet, daß die Klemme (23) mit einer Vorspannkraft (Feder 41) in die Abziehstellung vorgespannt ist und in der Anbringstellung gegen die Vorspannkraft mittels einer auslösbaren Riegeleinrichtung (43) verriegelbar ist.

4. Vorrichtung nach Anspruch 3, dadurch gekennzeichnet, daß die Riegeleinrichtung (43) von der Steuereinrichtung (15) selbsttätig betätigbar ist.

5. Vorrichtung nach Anspruch 3 oder 4, dadurch gekennzeichnet, daß die Abzieheinrichtung eine Viskositätsbremse (47) aufweist.

6. Vorrichtung nach einem der Ansprüche 2 bis 5, dadurch gekennzeichnet, daß die Klemme (23) in der Anbringstellung aus einem Anbringbereich in einen Freigabebereich bewegbar ist, in welchem sie ein Befüllen des Probenbehälters (1) nicht behindert.

7. Vorrichtung nach einem der Ansprüche 2 bis 6, dadurch gekennzeichnet, daß die Halterung (9) und die Klemme (23) zur Aufnahme von Probenbehältern (1) verschiedener Abmessungen ausgebildet sind.

8. Vorrichtung nach Anspruch 7, dadurch gekennzeichnet, daß die Halterung (9) relativ zu der Klemme (23) einstellbar ist.

9. Vorrichtung nach Anspruch 7 oder 8, dadurch gekennzeichnet, daß die Heizeinrichtung (5) auf unterschiedliche Verfahrensabläufe einstellbar ist.

10. Vorrichtung nach einem der vorhergehenden Ansprüche, dadurch gekennzeichnet, daß die Heizeinrichtung (5) einen auf den Abschmelzbereich (3) fokussierten Brenner (77) für gasförmigen Brennstoff und einen Brennstoffbehälter (79) aufweist.

11. Vorrichtung nach einem der Ansprüche 1 bis 9, dadurch gekennzeichnet, daß die Heizeinrichtung (205) eine Infrarotlampe (277) aufweist, die auf den Abschmelzbereich (203) fokussiert ist, zur Verwendung von Probenbehältern (201), die wenigstens in den Abschmelzbereich (203) eine zum Abschmelzen ausreichende Infrarot-Absorption haben.

12. Zur Verwendung bei der Vorrichtung nach einem der Ansprüche 1 bis 11 dienender Probenbehälter (201), dadurch gekennzeichnet, daß er zumindest in einem Abschmelzbereich (203) aus infrarot-absorbierendem Glas besteht.

13. Probenbehälter nach Anspruch 12, dadurch gekennzeichnet, daß das Glas eine niedrige Abschmelztemperatur hat.

14. Probenbehälter nach Anspruch 13, dadurch gekennzeichnet, daß das Glas eine Abschmelztemperatur von etwa 950 bis 1000°C hat.

15. Zur Verwendung bei der Vorrichtung nach einem der Ansprüche 1 bis 11 vorgesehener Probenbehälter, dadurch gekennzeichnet, daß er vorgegebener standardisierte Abmessungen aufweist.

16. Verwendung des Probenbehälters nach einem der Ansprüche 12 bis 15 zum Versenden medizinischen Probenmaterials.

17. Verwendung des Probenbehälters nach einem der Ansprüche 12 bis 15 bei der Vorrichtung nach einem der Ansprüche 1 bis 11.

Fig. 1

Fig. 2